# EUROPÄISCHE PATENTSCHRIFT

(11) **EP 2 832 469 B1**
(45) Veröffentlichungstag und Bekanntmachung des Hinweises auf die Patenterteilung: **17.05.2017**
(21) Anmeldenummer: 14176990.1
(22) Anmeldetag: 15.07.2014
(51) Int. Cl.: B21D 43/02, B25J 15/00

(54) **Vorrichtung zum Handhaben von Werkstücken sowie maschinelle Anordnung mit einer derartigen Vorrichtung**
Device for handling workpieces and mechanical assembly with such a device
Dispositif de manipulation de pièces à usiner ainsi qu'installation mécanique dotée d'un tel dispositif

(30) Priorität: 30.07.2013 DE 102013214844
(43) Veröffentlichungstag der Anmeldung: 04.02.2015
(73) Patentinhaber: Trumpf Sachsen GmbH, 01904 Neukirch (DE)
(72) Erfinder: Busch, Marcus, 01324 Dresden (DE); Drechsler, Philipp, 01904 Steinigtwolmsdorf (DE)
(74) Vertreter: Kohler Schmid Möbus Patentanwälte

(56) Entgegenhaltungen:
- WO-A1-2012/089859
- US-A- 5 782 129
- US-A1- 2004 130 085
- US-A1- 2010 133 405

## Beschreibung

Die Erfindung betrifft eine Vorrichtung zum Handhaben von Werkstücken an einer eine Werkstückauflageebene definierenden Werkstückauflage,
- mit einer Tragstruktur, die sich mit ihrer Hauptebene parallel zu der Werkstückauflageebene erstreckt und die Tragstruktursegmente aufweist, die ihrerseits parallel zu der Hauptebene der Tragstruktur nebeneinander angeordnet sind und eine flächige Erstreckung der Tragstruktur in deren Hauptebene definieren,
- mit einer für die Tragstruktursegmente vorgesehenen Führungsvorrichtung, an welcher Tragstruktursegmente parallel zu der Hauptebene der Tragstruktur zustellbar geführt sind sowie
- mit Halteorganen, mit denen Tragstruktursegmente der Tragstruktur versehen sind und die an zu handhabenden Werkstücken zum Fixieren der Werkstücke anlegbar sind,
- wobei mit Halteorganen versehene Tragstruktursegmente der Tragstruktur wenigstens zwei Segmentanordnungen ausbilden, die an der Führungsvorrichtung unter Veränderung der flächigen Erstreckung der Tragstruktur längs einer ersten Achse, welche die Hauptebene der Tragstruktur aufspannt, relativ zueinander gesteuert motorisch zustellbar sind und die als Mehrsegmentanordnungen mit jeweils wenigstens zwei Tragstruktursegmenten ausgebildet sind, die ihrerseits längs einer zweiten die Hauptebene der Tragstruktur aufspannenden und senkrecht zu der ersten Achse der Hauptebene der Tragstruktur verlaufenden Achse nebeneinander angeordnet sind, und
- wobei die Tragstruktursegmente der Mehrsegmentanordnungen unter Veränderung der flächigen Erstreckung der Tragstruktur längs der zweiten Achse der Hauptebene der Tragstruktur relativ zueinander gesteuert motorisch zustellbar sind.

Die Erfindung betrifft des Weiteren eine mit einer Vorrichtung der vorstehenden Art versehene maschinelle Anordnung zum Bearbeiten, vorzugsweise zum schneidenden Bearbeiten von Werkstücken, insbesondere von Blechen.

Gattungsgemäßer Stand der Technik ist offenbart in US 2004/0130085 A1 und WO 2012/089859 A1.

US 2004/0130085 A1 offenbart eine zur Automatisierung der Werkstückbearbeitung an Pressen vorgesehene Haltevorrichtung zum Fixieren von plattenartigen Werkstücken. Zu diesem Zweck weist die Haltevorrichtung eine Tragstruktur auf, die aus einem in einer ersten Achsrichtung verlaufenden X-Stangenpaar sowie aus mehreren, senkrecht zu der ersten Achsrichtung in einer zweiten Achsrichtung verlaufenden und das X-Stangenpaar kreuzenden Y-Stangenpaaren besteht. Jedes der Stangenpaare umfasst eine Führungsstange sowie eine Antriebsspindel. An der Führungsstange des X-Stangenpaars sind die Y-Stangenpaare in der ersten Achsrichtung geführt. An der Antriebsspindel des X-Stangenpaars werden die Y-Stangenpaare in der ersten Achsrichtung angetrieben. Dabei ist an jedem Knotenpunkt der Y-Stangenpaare und des X-Stangenpaares eine separate Antriebseinheit mit einem eigenen Antriebsmotor angeordnet. An der Führungsstange jedes Y-Stangenpaars sind zwei Sauger in der zweiten Achsrichtung geführt, wobei jeweils ein Sauger auf jeder Seite des X-Stangenpaars angeordnet ist. Zum Antrieb jedes der Sauger dient eine separate Antriebseinheit mit einem eigenen Antriebsmotor.

WO 2012/089859 A1 betrifft eine Greifvorrichtung zum Handhaben flexibler Elemente. Zur Fixierung von flexiblen Elementen weist die Greifvorrichtung neun Sauger auf, von denen jeweils drei Sauger eine Saugergruppe bilden. Die drei Sauger einer jeden Saugergruppe sind einander in einer ersten Achsrichtung benachbart. Senkrecht zu der ersten Achsrichtung liegen die drei Saugergruppen in einer zweiten Achsrichtung nebeneinander. In der zweiten Achsrichtung gesehen ergeben sich damit zwei äußere Saugergruppen und eine zwischen diesen angeordnete mittlere Saugergruppe. In der zweiten Achsrichtung werden die Sauger der beiden äußeren Saugergruppen jeweils gemeinschaftliche bewegt. Von den Saugern der mittleren Saugergruppe ist lediglich ein Sauger in der zweiten Achsrichtung beweglich. In der ersten Achsrichtung ist der mittlere Sauger der äußeren Saugergruppen jeweils unbeweglich. Die beiden übrigen Sauger jeder der beiden äußeren Saugergruppen können relativ zu dem jeweiligen mittleren Sauger in der ersten Achsrichtung bewegt werden. die Sauger der mittleren Saugergruppe sind allesamt in der ersten Achsrichtung beweglich. Zur Erzeugung von Bewegungen in der ersten Achsrichtung sind die betreffenden Sauger der beiden äußeren Saugergruppen und der mittleren Saugergruppe jeweils mit einem eigenen Antriebsmotor versehen.

Gattungsfremder Stand der Technik ist offenbart in US 2010/0133405 A1, US 5,782,129 A sowie in EP 1 967 301 A1.

US 2010/0133405 A1 betrifft eine Halteeinheit für eine Plattentransfervorrichtung. Die Halteeinheit umfasst einen Tragrahmen sowie an dem Tragrahmen beweglich geführte und teleskopierbare Haltearme. An dem freien Ende eines jeden Haltearms ist eine Saugerplatte vorgesehen. Durch Zustellbewegungen der Haltearme längs des Tragrahmens und durch Ein- und Ausfahren der teleskopierbaren Haltearme werden die Saugerplatten der Halteeinheit in Abhängigkeit von der Geometrie des zu fixierenden Gegenstandes positioniert. Ein motorischer Stellantrieb zur Positionierung der Saugerplatten ist nicht offenbart.

Aus US 5,782,129 A ist eine Transfervorrichtung für Bleche bekannt, die an einer Anlage mit mehreren Bearbeitungsstationen zum Einsatz kommt. Die Transfervorrichtung umfasst eine Mehrzahl von Transfereinheiten, die zwischen den Bearbeitungsstationen an Führungsschienen verfahren. Die Führungsschienen sind senkrecht zu der Bewegungsrichtung der Transfereinheiten voneinander beabstandet. Jede der Transfereinheiten umfasst zwei zwischen den Führungsschienen verlaufende und in Bewegungsrichtung voneinander beabstandete Querträger. An jedem der Querträger ist eine Vakuumsaugereinheit mit zwei Vakuumsaugern in Querträgerlängsrichtung beweglich geführt. Mit Hilfe von Spindelantrieben kann der in der Bewegungsrichtung der Transfereinheiten bestehende Abstand zwischen den Querträgern verstellt werden. Mit dem Abstand der Querträger ändert sich auch der Abstand der an den Querträgern angeordneten Vakuumsaugereinheiten. Zusätzlich können die Vakuumsaugereinheiten mittels eines Spindelantriebs längs des jeweiligen Querträgers zugestellt werden. Der gegenseitige Abstand der Vakuumsauger einer Vakuumsaugereinheit längs der Querträger ist unveränderlich.

EP 1 967 301 A1 beschreibt eine maschinelle Anordnung zum Bearbeiten von plattenartigen Werkstücken, die eine Handlingvorrichtung für Bearbeitungsprodukte umfasst. Die Handlingvorrichtung weist einen Saugerrahmen auf, der angehoben und abgesenkt und außerdem in horizontaler Richtung verfahren werden kann. An dem Saugerrahmen sind insgesamt vier Entnahmeleisten vorgesehen, die werkstückseitig mit Saugern zum Fixieren der zu handhabenden Bearbeitungsprodukte versehen sind. Die Entnahmeleisten bilden Tragstruktursegmente einer sich aus den Entnahmeleisten zusammensetzenden Tragstruktur. Die flächige Erstreckung der Tragstruktur ist variabel. Zu diesem Zweck können zwei der Entnahmeleisten mittels eines gesteuerten motorischen Antriebes gemeinschaftlich relativ zu den beiden übrigen Entnahmeleisten linear zugestellt werden. Von dieser Zustellmöglichkeit wird Gebrauch gemacht, um die von den Entnahmeleisten gebildete Tragstruktur und somit insbesondere auch die Konfiguration des aus den Saugern der Entnahmeleisten bestehenden Saugerfeldes der Tragstruktur an wechselnde Einsatzbedingungen anzupassen.

Eine besonders kompakte und mit besonders geringem technischem Aufwand realisierbare Vorrichtung zum Handhaben von Werkstücken bereitzustellen, ist Aufgabe der vorliegenden Erfindung.

Erfindungsgemäß gelöst wird diese Aufgabe durch die Handhabungsvorrichtung nach Patentanspruch 1 und durch die maschinelle Anordnung nach Patentanspruch 13.

Anspruchsgemäß sind mit Halteorganen versehene Tragstruktursegmente der Tragstruktur einer Vorrichtung zum Handhaben von Werkstücken mittels gesteuerter motorischer Antriebe in beiden Achsrichtungen einer Hauptebene der Tragstruktur relativ zueinander zustellbar. Infolgedessen lässt sich das von den Halteorganen der Tragstruktursegmente gebildete Halteorganfeld automatisiert auf unterschiedlichste Art und Weise konfigurieren. Durch entsprechende Einstellung der Positionen, welche die Tragstruktursegmente und die an diesen vorgesehenen Halteorgane in den beiden Achsrichtungen der Hauptebene der Tragstruktur relativ zueinander einnehmen, kann das Halteorganfeld insbesondere an beliebige Geometrien der zu handhabenden Werkstücke angepasst werden. Sind als Halteorgane Sauger vorgesehen, so lässt sich auch vermeiden, dass Sauger an dem zu handhabenden Werkstück in einem gelochten Bereich zu liegen kommen und dann die erforderliche Haltekraft nicht aufbauen können. Mit einer Veränderung der Konfiguration des von den Halteorganen der Tragstruktursegmente gebildeten Halteorganfeldes geht eine Veränderung der flächigen Erstreckung der Tragstruktur einher. Folglich kann die erfindungsgemäße Tragstruktur sowohl an die Größe der zu handhabenden Werkstücke als auch an die räumlichen Verhältnisse an ihrem Einsatzort angepasst werden. Etwa zum Einsatz in dem räumlich beengten Nahbereich einer für die Bearbeitung von Werkstücken genutzten Bearbeitungseinrichtung, beispielsweise zum Einsatz im Nahbereich eines Stanz- oder Laserschneidkopfs einer Werkzeugmaschine, lassen sich die Tragstruktursegmente in beiden Achsrichtungen der Hauptebene der Tragstruktur einander eng annähern. Dadurch ergibt sich eine kleinflächige Tragstruktur, die im Nahbereich der Bearbeitungseinrichtung kollisionsfrei agieren kann und beispielsweise in der Lage ist, Werkstücke nach der Bearbeitung unmittelbar an der Bearbeitungseinrichtung aufzunehmen. Gleichzeitig besteht die Möglichkeit, die Tragstruktur dort, wo entsprechend viel Raum zur Verfügung steht durch entsprechende Positionierung der Tragstruktursegmente großflächig zu konfigurieren. Eine großflächige Tragstruktur ist insbesondere in der Lage, entsprechend großflächige Werkstücke zu handhaben.

Erfindungsgemäß ist für mehrere Tragstruktursegmente ein gemeinsamter Segment-Zustellantrieb vorgesehen. Durch Verwendung eines einzigen Antriebes für mehrere zu bewegende Einheiten werden die Kosten der Gesamtanordnung ebenso minimiert wie deren Masse und deren Baumaß. Als Antriebsbauarten kommen insbesondere elektrische oder pneumatische Antriebe in Frage. Der gemeinsame Segment-Zustellantrieb ist über ein Verzahnungsgetriebe mit den relativ zueinander zustellbaren Tragstruktursegmenten der Mehrsegmentanordnungen antriebsverbunden. Verzahnungsgetriebe mit einer Zahnstange und einem damit kämmenden Antriebsritzel zeichnen sich insbesondere durch eine hohe Steifigkeit und eine kompakte Bauweise aus. Außerdem lassen sich mit Hilfe von Verzahnungsgetrieben Bewegungen mit verhältnismäßig hohen Geschwindigkeiten realisieren.

Der mehreren Tragstruktursegmenten gemeinsame Segment-Zustellantrieb weist einen einzelnen Antriebsmotor auf, der eine längs der ersten Achse der Hauptebene der Tragstruktur verlaufende Antriebswelle um die geometrische Wellenachse antreibt. Auf der gemeinsamen Antriebswelle sitzen mehrere Antriebsritzel, die jeweils an einer Mehrsegmentanordnung drehbar gelagert sind. Jedes der Antriebsritzel kämmt mit wenigstens zwei Zahnstangen, von denen jede mit einem Tragstruktursegment der betreffenden Mehrsegmentanordnung verbunden ist. Rotiert die von dem gemeinsamen Antriebsmotor angetriebene Antriebswelle, so bewegen die auf der Antriebswelle aufsitzenden Getrieberitzel über die mit den Antriebsritzeln jeweils im Eingriff befindlichen Zahnstangen mehrere Tragstruktursegmente der jeweiligen Mehrsegmentanordnung längs der zweiten Achse der Hauptebene der Tragstruktur. Auf diese Art und Weise können Tragstruktursegmente mehrerer Mehrsegmentanordnungen mittels eines einzigen Antriebsmotors und einer einzigen Antriebswelle relativ zueinander längs der zweiten Achse der Hauptebene der Tragstruktur zugestellt werden. Damit die einzelnen Mehrsegmentanordnungen dessen ungeachtet längs der ersten Achse der Hauptebene der Tragstruktur relativ zueinander positioniert werden können, sind die an den Mehrsegmentanordnungen drehbar gelagerten Antriebsritzel längs der gemeinsamen Antriebswelle relativ zueinander gesteuert motorisch zustellbar. Gleiches gilt für die Zahnstangen, mit denen die Antriebsritzel jeweils kämmen. Die Kombination einer längsverschieblichen und einer drehfesten Lagerung der Antriebsritzel auf der gemeinsamen Antriebswelle ist in bevorzugter Ausgestaltung der Erfindung dadurch realisiert, dass als gemeinsame Antriebswelle eine Antriebswelle mit Polygonquerschnitt verwendet wird, die an den auf der Antriebswelle aufsitzenden Antriebsritzeln in eine Nabe mit entsprechender Querschnittsgeometrie eingreifen. Die Zustellbewegungen der Antriebsritzel bzw. die Zustellbewegungen der die Antriebsritzel lagernden Mehrsegmentanordnungen längs der ersten Achse der Hauptebene der Tragstruktur werden erfindungsgemäß insbesondere mit Hilfe von kompakten Linearantrieben erzeugt.

Besondere Ausführungsarten der Vorrichtung nach Patentanspruch 1 ergeben sich aus den abhängigen Patentansprüchen 2 bis 12.

Ausweislich Patentanspruch 2 wird ein gemeinsamer Anordnungs-Zustellantrieb für mehrere Segmentanordnungen bevorzugt.

In weiterer bevorzugter Ausgestaltung der Erfindung ist der gemeinsame Anordnungs-Zustellantrieb mit den relativ zueinander zustellbaren Segment-Anordnungen über ein Verzahnungsgetriebe antriebsverbunden. (Patentanspruch 3).

Das Verzahnungsgetriebe des Anordnungs-Zustellantriebs weist ein mittels eines gemeinsamen Antriebsmotors des gemeinsamen Anordnungs-Zustellantriebs angetriebenes Antriebsritzel sowie über das Antriebsritzel gesteuert zustellbare Zahnstangen auf, die mit den relativ zueinander zustellbaren Mehrsegmentanordnungen verbunden sind (Patentanspruch 4).

Gemäß Patentanspruch 5 ist in weiterer bevorzugter Ausgestaltung der Erfindung vorgesehen, dass von den längs der ersten Achse der Hauptebene der Tragstruktur relativ zueinander gesteuert motorisch zustellbaren Segmentanordnungen der Tragstruktur eine Segmentanordnung in der Bewegungsrichtung stationär ist. Eine derart unveränderliche Positionierung einer Segmentanordnung längs der ersten Achse der Hauptebene der Tragstruktur ist insbesondere in Fällen akzeptabel, in denen die betreffende Segmentanordnung unabhängig von der konkreten Handhabungsaufgabe mit einheitlicher räumlicher Zuordnung gegenüber einem Werkstück bzw. einer Werkstückauflage angeordnet wird. Vorteilhafterweise erlaubt die stationäre Positionierung einer Segmentanordnung den Verzicht auf einen für diese Segmentanordnung ansonsten bereitzustellenden motorischen Antrieb.

Durch einen entsprechenden Vorteil zeichnet sich die Erfindungsbauart nach Patentanspruch 6 aus, im Falle derer von den längs der zweiten Achse der Hauptebene der Tragstruktur relativ zueinander gesteuert motorisch zustellbaren Tragstruktursegmenten wenigstens einer Mehrsegmentanordnung ein Tragstruktursegment in der Bewegungsrichtung stationär ist.

Patentanspruch 7 betrifft eine Ausführungsform der Erfindung, im Falle derer wenigstens eine Mehrsegmentanordnung eine ungerade Anzahl an Tragstruktursegmenten umfasst. In bevorzugter Ausgestaltung der Erfindung ist dabei als längs der zweiten Achse der Hauptebene der Tragstruktur stationäres Tragstruktursegment das mittlere der Tragstruktursegmente vorgesehen. Im Interesse einer möglichst symmetrischen Lastverteilung empfiehlt es sich, die betreffende Mehrsegmentanordnung mit dem mittleren stationären Tragstruktursegment mittig an der zugehörigen Führungsvorrichtung der erfindungsgemäßen Handhabungsvorrichtung zu lagern.

Durch eine symmetrische Lastverteilung zeichnet sich auch die Erfindungsbauart nach Patentanspruch 8 aus. Wenigstens eine Mehrsegmentanordnung weist für die zugehörigen Tragstruktursegmente längs der zweiten Achse der Hauptebene der Tragstruktur ein Bewegungszentrum auf. Bezüglich des Bewegungszentrums sind die Tragstruktursegmente längs der zweiten Achse der Hauptebene der Tragstruktur symmetrisch angeordnet. Die Symmetrie der Anordnung der Tragstruktursegmente bezüglich des Bewegungszentrums bleibt auch bei Zustellbewegungen der Tragstruktursegmente längs der zweiten Achse der Hauptebene der Tragstruktur erhalten, weil das oder die Tragstruktursegmente auf der einen Seite des Bewegungszentrums und das oder die Tragstruktursegmente auf der anderen Seite des Bewegungszentrums miteinander synchrone und dabei gegenläufige Zustellbewegungen längs der zweiten Achse der Hauptebene der Tragstruktur ausführen.

Im Interesse eines optimierten Lastabtrags in die Führungsvorrichtung der erfindungsgemäßen Handhabungsvorrichtung empfiehlt es sich, Mehrsegmentanordnungen mit einem Bewegungszentrum für die zugehörigen Tragstruktursegmente mit mittiger Anordnung des Bewegungszentrums an der Führungsvorrichtung zu lagern, gegebenenfalls mit mittiger Anordnung des Bewegungszentrums mittels der Führungsvorrichtung längs der ersten Achse der Hauptebene der Tragstruktur zustellbar zu führen (Patentanspruch 9).

Eine auf wechselnde Anwendungsfälle abgestimmte Konfiguration des von den Halteorganen der Tragstruktursegmente gebildeten Halteorganfeldes ist insbesondere dann möglich, wenn die Tragstruktursegmente wenigstens einer Mehrsegmentanordnung längs der zweiten Achse der Hauptebene der Tragstruktur in einer Reihe nebeneinander angeordnet sind und/oder wenn die Tragstruktursegmente verschiedener Tragstruktursegmentreihen spaltenartig angeordnet sind (Patentansprüche 10 und 11).

Eine besonders hohe Flexibilität hinsichtlich der Konfiguration des von den Halteorganen der einzelnen Tragstruktursegmente gebildeten Halteorganfeldes besitzt die in Patentanspruch 12 beschrieben Variante der erfindungsgemäßen Handhabungsvorrichtung. Die Tragstruktursegmente dieser Erfindungsbauart können einander derart angenähert werden, dass an einander benachbarten Tragstruktursegmenten einerseits vorgesehene und wenigstens ein Halteorgan aufweisende Vorsprünge in andererseits vorgesehene Rücksprünge eingreifen. Bei entsprechender Anordnung der Halteorgane an den betreffenden Tragstruktursegmenten können Halteorgane an dem oder den Vorsprüngen eines Tragstruktursegmentes und Halteorgane in einem den oder die Rücksprünge begrenzenden Bereich eines benachbarten Tragstruktursegmentes bei Zustell-Relativbewegungen der Tragstruktursegmente einander in der jeweiligen Bewegungsrichtung sogar passieren. Die Umrisskonturen einander benachbarter Tragstruktursegmente können derart komplementär gestaltet sein, dass die Tragstruktursegmente im einander angenäherten Zustand miteinander verzahnt sind.

Nachfolgend wird die Erfindung anhand beispielhafter schematischer Darstellungen näher erläutert. Es zeigen:
- Figur 1: eine perspektivische Darstellung einer Vorrichtung zum Handhaben von Werkstücken mit einer Tragstruktursegmente aufweisenden Tragstruktur in einem ersten Funktionszustand,
- Figur 2: die Vorrichtung gemäß Figur 1 in der Draufsicht,
- Figur 3: die Tragstruktursegmente der Tragstruktur gemäß den Figuren 1 und 2 in der werkstückseitigen Ansicht,
- Figuren 4 und 5: die Vorrichtung gemäß den Figuren 1 bis 3 in einem zweiten Funktionszustand,
- Figur 6: die Tragstruktursegmente der Tragstruktur gemäß den Figuren 4 und 5 in der werkstückseitigen Ansicht,
- Figur 7: ein Detail eines Antriebs für die Tragstruktursegmente gemäß den Figuren 1 bis 6 und
- Figur 8: eine Vorrichtung zum Handhaben von Werkstücken mit einer abweichend von den Figuren 1 bis 7 ausgeführten Tragstruktur.

Eine in den Figuren dargestellte Vorrichtung 1 zum Handhaben von Werkstücken ist als Automatisierungskomponente für eine als Stanzmaschine 2 ausgeführte Werkzeugmaschine vorgesehen. An der Stanzmaschine 2 werden der Einfachheit halber nicht gezeigte Bleche durch Stanzen schneidend bearbeitet. Die Vorrichtung 1 dient dazu, der Stanzmaschine 2 Werkstücke in Form unbearbeiteter Rohbleche zur Bearbeitung zuzuführen und als Bearbeitungsprodukte erzeugte Werkstücke aus dem Nahbereich der Stanzmaschine 2 abzuführen.

In gewohnter Weise ist die Vorrichtung 1 über einen Montagerahmen 3 mit einer nicht gezeigten Bewegungseinheit verbunden, die gemeinschaftlich mit der Vorrichtung 1 längs einer linearen Führungsbahn eines Führungsgerüsts in Richtung eines Doppelpfeils 4 horizontal verfahren kann. In vertikaler Richtung kann die Vorrichtung 1 gegenüber der Bewegungseinheit in Richtung eines Doppelpfeils 5 angehoben und abgesenkt werden. Auf diese Art und Weise kann die Vorrichtung 1 im Vorfeld der Werkstückbearbeitung Rohbleche von einer als Werkstückauflage dienenden Rohblechpalette aufnehmen und zur Bearbeitung auf einen nicht gezeigten Maschinentisch der Stanzmaschine 2 transferieren. Nach Beendigung der Werkstückbearbeitung kann die Vorrichtung 1 die als Bearbeitungsprodukte vorliegenden Blechteile an dem Maschinentisch der Stanzmaschine 2 aufnehmen und zu einer abseits der Stanzmaschine 2 angeordneten Werkstückauflage, beispielsweise zu einer Fertigteilpalette oder zu einer Restgitterpalette transportieren.

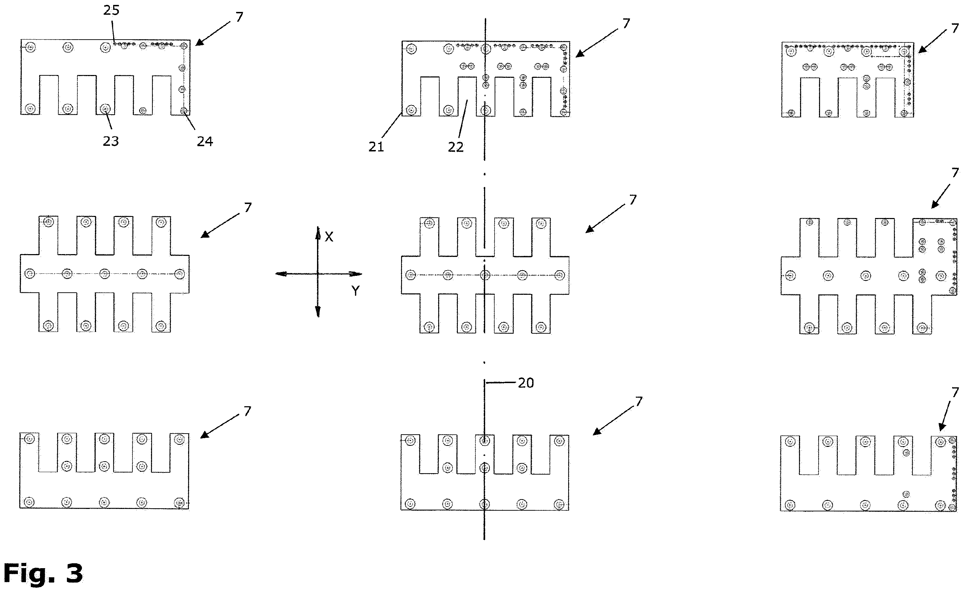

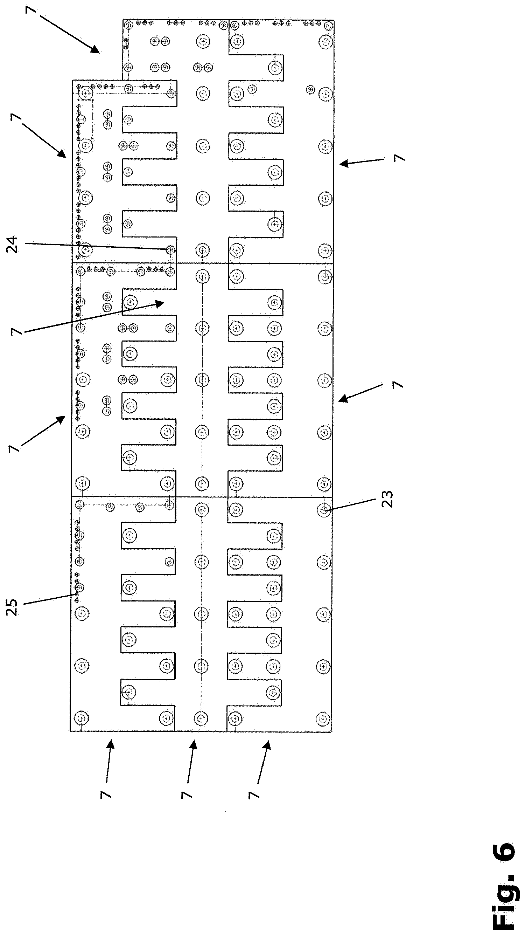

Zum Fixieren der zu transportierenden Werkstücke weist die Vorrichtung 1 eine Tragstruktur 6 auf, die eine Mehrzahl von plattenartigen Tragstruktursegmenten umfasst. Die Tragstruktursegmente sind als Saugerplatten 7 ausgeführt und als solche werkstückseitig mit Halteorganen in Form von herkömmlichen Saugern 23, 24, 25 versehen. In den Figuren 3 und 6 sind die Sauger 23, 24, 25 an den Saugerplatten 7 in der werkstückseitigen Ansicht der Tragstruktur 6 zu erkennen.

Vorliegend werden Sauger 23, 24, 25 in drei unterschiedlichen Größen verwendet. Die Verteilung der Sauger 23, 24, 25 über die Saugerplatten 7 ist variabel. Gleiches gilt folglich für die Geometrie der Saugerfelder der einzelnen Saugerplatten 7 und mithin für die Geometrie des gesamten Saugerfeldes der Tragstruktur 6.

In dem dargestellten Beispielsfall umfasst die Tragstruktur 6 insgesamt neun Saugerplatten 7, die parallel zu der horizontalen Hauptebene der Tragstruktur 6 nebeneinander liegen und die flächige Erstreckung der Tragstruktur 6 in deren Hauptebene bestimmen.

Jeweils drei Saugerplatten 7 bilden eine als Mehrsegmentanordnung ausgeführte Segment- oder Saugerplattenanordnung 8/1, 8/2, 8/3. Längs einer ersten, die Hauptebene der Tragstruktur 6 aufspannenden Achse (X-Achse) sind die Saugerplattenanordnungen 8/1, 8/2, 8/3 relativ zueinander zustellbar. Zu diesem Zweck sind die Saugerplattenanordnungen 8/1, 8/2 längs der X-Achse beweglich an einem mit dem Montagerahmen 3 verbundenen Führungsrahmen 9 gelagert. Die Saugerplattenanordnung 8/3 ist an dem Führungsrahmen 9 in X-Richtung ortsfest montiert.

Längs einer zweiten die Hauptebene der Tragstruktur 6 aufspannenden Achse (Y-Achse) sind die Saugerplatten 7 einer jeden Saugerplattenanordnung 8/1, 8/2, 8/3 relativ zueinander zustellbar. Dabei sind die jeweils außen liegenden Saugerplatten 7 jeder der Saugerplattenanordnungen 8/1, 8/2, 8/3 an einer Teleskopschiene 10 befestigt, die ihrerseits mit zwei Teilschienen längs der Y-Achse aus einem sich in Y-Richtung ersteckenden Träger 11 ausfahren oder in den Träger 11 einfahren kann. Die mittleren Saugerplatten 7 der Saugerplattenanordnungen 8/1, 8/2, 8/3 sind an den Trägern 11 in Richtung der Y-Achse ortsfest montiert.

Die Träger 11 der Saugerplattenanordnungen 8/1, 8/2 sind an dem Führungsrahmen 9 längs der X-Achse beweglich geführt. Sämtliche Träger 11 führen die an ihnen aus- und einfahrenden Teleskopschienen 10 der Saugerplattenanordnung 8/1, 8/2, 8/3 längs der Y-Achse.

Die Träger 11 bilden demnach die Y-Führung einer Führungsvorrichtung 12 zur Führung der Saugerplatten 7 parallel zu der Hauptebene der Tragstruktur 6. Als X-Führung der Führungsvorrichtung 12 dient der Führungsrahmen 9, an welchem die Träger 11 mit den Saugerplattenanordnungen 8/1, 8/2 längs der X-Achse verfahren können.

Zur Erzeugung von Relativ-Zustellbewegungen der Saugerplattenanordnungen 8/1, 8/2, 8/3 längs der X-Achse dienen zwei in den Figuren verdeckt angeordnete Linearmotoren üblicher Bauart, von denen jeweils einer den Träger 11 der Saugerplattenanordnung 8/1 sowie den Träger 11 der Saugerplattenanordnung 8/2 gesteuert längs der X-Achse antreibt.

Relativ-Zustellbewegungen der Saugerplatten 7 der verschiedenen Saugerplattenanordnungen 8/1, 8/2, 8/3 längs der Y-Achse werden mittels eines allen in Y-Richtung beweglichen Saugerplatten 7 gemeinsamen Antriebsmotors 13 ausgeführt.

Der Antriebsmotor 13 ist in dem vorliegenden Beispielsfall als elektrischer Antriebsmotor ausgeführt und an dem Führungsrahmen 9 der Vorrichtung 1 ortsfest montiert. Anstelle des elektrischen Antriebsmotors 13 wäre insbesondere auch ein pneumatischer oder ein hydraulischer Servomotor denkbar.

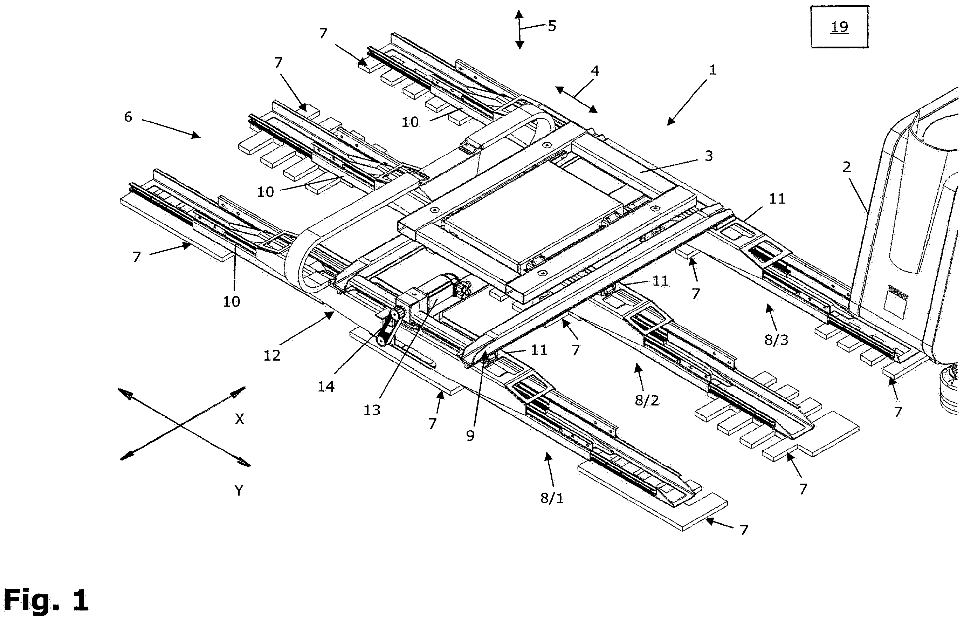

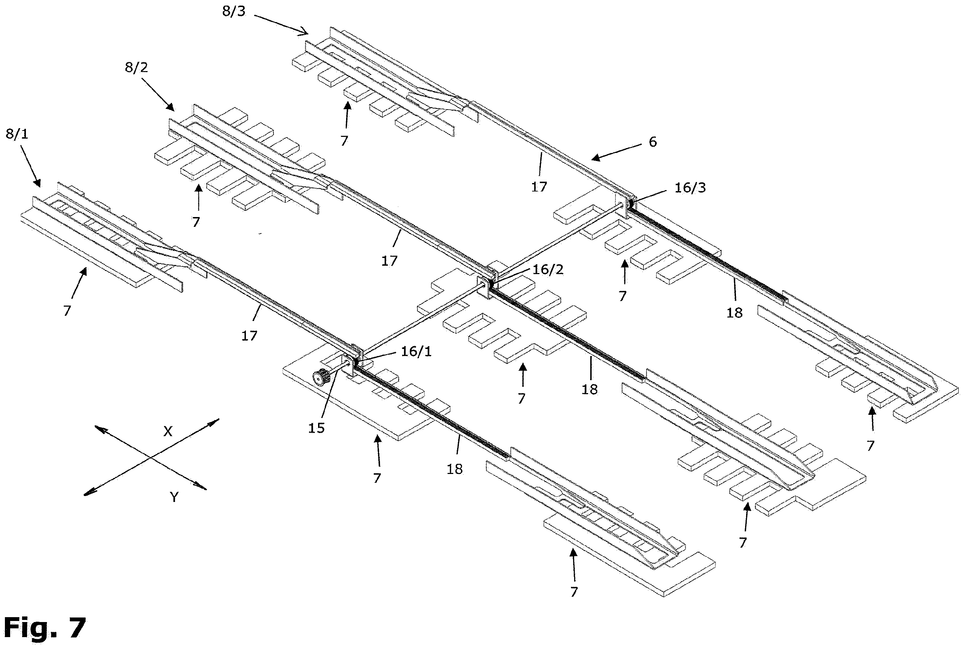

Über einen Zahnriemen 14 treibt der Antriebs-motor 13 eine als Polygonwelle 15 ausgebildete Antriebswelle an, die in Figur 1 verdeckt unterhalb des Führungsrahmens 9 angeordnet ist und sich dort längs der X-Achse erstreckt. Im Einzelnen ist die Polygonwelle 15 in Figur 7 zu erkennen. Die Polygonwelle 15 wird als gemeinsame Antriebswelle für alle in Y-Richtung beweglichen Saugerplatten 7 der Trag-struktur 6 genutzt. Zusammen mit dem gemeinsamen Antriebsmotor 13 bildet die gemeinsame Polygonwelle 15 einen gemeinsamen Segment-Zustellantrieb der längs der Y-Achse beweglichen Saugerplatten 7.

Auf der Polygonwelle 15 sitzen Antriebsritzel 16/1, 16/2, 16/3 auf, die ihrerseits an den Trägern 11 der Saugerplattenanordnungen 8/1, 8/2, 8/3 um die geometrische Achse der Polygonwelle 15 drehbar gelagert sind. Die Naben der Antriebsritzel 16/1, 16/2, 16/3 besitzen einen der Querschnittsform der Polygonwelle 15 entsprechenden Polygonquerschnitt. In Längsrichtung der Polygonwelle 15, d.h. längs der X-Achse, sind das Antriebsritzel 16/1 der Saugerplattenanordnung 8/1 und das Antriebsritzel 16/2 der Saugerplattenanordnung 8/2 relativ zu der Polygonwelle 15 verschiebbar.

Jedes der Antriebsritzel 16/1, 16/2, 16/3 kämmt mit zwei Zahnstangen 17, 18, die ihrerseits mit den beiden Teilschienen der jeweiligen Teleskopschiene 10 verbunden sind. Die Antriebsritzel 16/1, 16/2, 16/3 bilden gemeinsam mit den mit ihnen kämmenden Zahnstangen 17, 18 ein Verzahnungsgetriebe zwischen der Polygonwelle 15 und den in Y-Richtung beweglichen Saugerplatten 7.

Rotiert die Polygonwelle 15 mit den Antriebsritzeln 16/1, 16/2, 16/3 um ihre geometrische Achse, so resultieren daraus gegenläufige Bewegungen der Zahnstangen 17, 18 und somit gegenläufige Bewegungen der an die Zahnstangen 17, 18 angebundenen äußeren Saugerplatten 7 einer jeden Saugerplattenanordnung 8/1, 8/2, 8/3 längs der Y-Achse.

Ein dem Antrieb für die Saugerplattenbewegung in Y-Richtung entsprechender Antrieb für die Bewegung der Saugerplattenanordnungen 8/1, 8/2 in X-Richtung ist anstelle des vorliegend realisierten Linearantriebes denkbar.

Sowohl die Steuerung des Antriebsmotors 13 zum gegenseitigen Zustellen der Saugerplatten 7 längs der Y-Achse als auch die Steuerung der Linearmotoren zum gegenseitigen Zustellen der Saugerplattenanordnungen 8/1, 8/2, 8/3 längs der X-Achse ist in eine in Figur 1 lediglich andeutungsweise dargestellte numerische Steuerung 19 der die Vorrichtung 1 und die Stanzmaschine 2 umfassenden maschinellen Anordnung integriert.

Die Tragstruktur 6 der Vorrichtung 1 zum Handhaben von Werkstücken wird in Abhängigkeit von der jeweiligen Handhabungsaufgabe durch gegenseitiges Zustellen der Saugerplatten 7 konfiguriert.

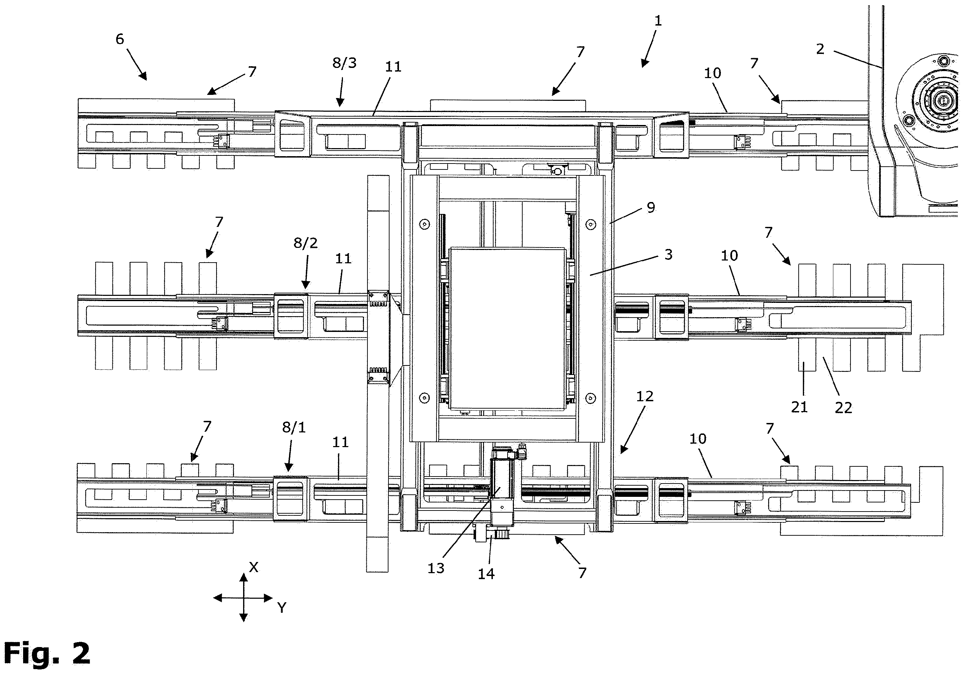

In den Figuren 1 bis 3 befindet sich die Tragstruktur 6 in einem Funktionszustand, in welchem sie zur Handhabung großflächiger Bleche insbesondere von Blechen des Formats 1,5 Meter x 3 Meter, geeignet ist. Aufgrund einer entsprechenden gegenseitigen Zustellung der Saugerplattenanordnungen 8/1, 8/2, 8/3 längs der X-Achse sowie der Saugerplatten 7 der einzelnen Saugerplattenanordnungen 8/1, 8/2, 8/3 längs der Y-Achse weist die Tragstruktur 6 ihre maximale flächige Erstreckung auf, die im Wesentlichen den Abmessungen des zu handhabenden großflächigen Bleches entspricht. In dem Funktionszustand gemäß den Figuren 1 bis 3 kann die Tragstruktur 6 insbesondere zum Beladen der Stanzmaschine 2 mit zu bearbeitenden Rohblechen eingesetzt werden. Wie auch aus Figur 3 hervorgeht, sind die Saugerplatten 7 der Tragstruktur 6 in dem dargestellten Funktionszustand in drei längs der X-Achse voneinander beabstandeten Reihen mit jeweils drei Saugerplatten 7 und in drei längs der Y-Achse voneinander beabstandeten Spalten mit jeweils drei Saugerplatten 7 angeordnet.

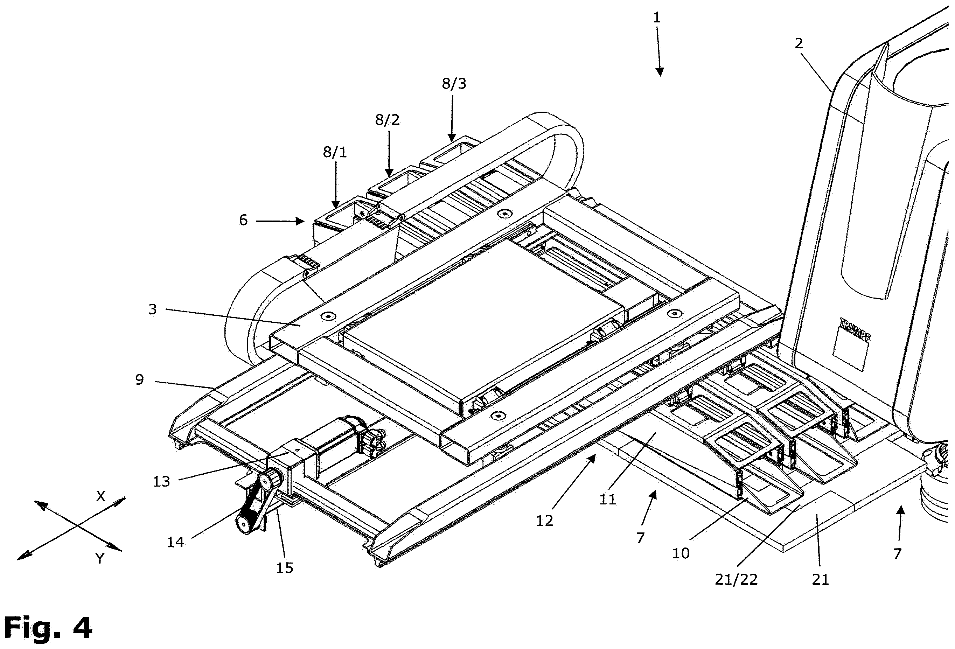

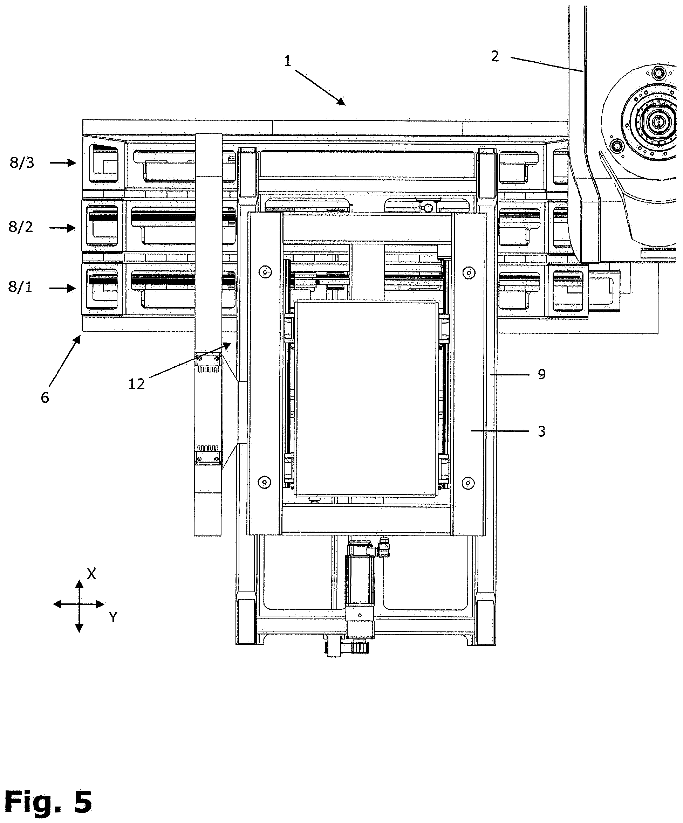

Der andere Extremfall der flächigen Erstreckung der Tragstruktur 6 ist in den Figuren 4 bis 6 dargestellt.

Ausgehend von den Verhältnissen gemäß den Figuren 1 bis 3 wurden sowohl die Linearmotoren der Saugerplattenanordnungen 8/1, 8/2 als auch der gemeinsame Antriebsmotor 13 der in Y-Richtung beweglichen Saugerplatten 7 der Saugerplattenanordnungen 8/1, 8/2, 8/3 gesteuert betätigt. Infolge der Motorbetätigung sind zum einen die beweglichen Saugerplattenanordnungen 8/1, 8/2 zu der ortsfesten Saugerplattenan-ordnung 8/3 hin verfahren. Zum andern wurden die außenliegenden Saugerplatten 7 der Saugerplattenanordnungen 8/1, 8/2, 8/3 gegenläufig zu den ortsfest an den Trägern 11 montierten mittleren Saugerplatten 7 bewegt. Bei den von den äußeren Saugerplatten 7 ausgeführten gegenläufigen Bewegungen blieb die Symmetrie der Saugerplattenanordnungen 8/1, 8/2, 8/3 bezüglich einer in Figur 3 angedeuteten Mittelachse 20 erhalten. Infolgedessen wurde auch der bereits in dem Funktionszustand gemäß den Figuren 1 bis 3 realisierte symmetrische Lastabtrag in den Führungsrahmen 9 aufgrund der gegenläufigen Bewegungen der äußeren Saugerplatten 7 der Saugerplattenanordnungen 8/1, 8/2, 8/3 nicht beeinträchtigt.

In den Figuren 4 bis 6 ist die flächige Erstreckung der Tragstruktur 6 minimal. In diesem Funktionszustand eignet sich die Tragstruktur 6 beispielsweise für einen Zugriff in den räumlich beengten Nahbereich des Stanzkopfes der Stanzmaschine 2. Insbesondere ist die Tragstruktur 6 in dem Funktionszustand gemäß den Figuren 4 bis 6 in der Lage, an der Stanzmaschine 2 erzeugte Bearbeitungsprodukte unmittelbar an dem Ort ihrer Fertigung aufzunehmen.

Wie insbesondere aus Figur 6 hervorgeht, greifen einander benachbarte Saugerplatten 7 der entsprechend konfigurierten Tragstruktur 6 mit einerseits vorgesehenen Vorsprüngen 21 und andererseits vorgesehenen Rücksprüngen 22 ineinander ein. Einander benachbarte Saugerplatten 7 sind dementsprechend miteinander verzahnt. Auf dem Weg in die Position gemäß Figur 6 passieren Sauger 23, 24, 25, die an Vorsprüngen 21 einander benachbarter Saugerplatten 7 angeordnet sind, einander längs der X-Achse. Aufgrund der Möglichkeit der Verzahnung der Saugerplatten 7 sind die Sauger 23, 24, 25 der Tragstruktur 6 besonders flexibel zueinander anordenbar.

Zwischenstellungen zwischen den von den Saugerplatten 7 in den Figuren 1 bis 3 einerseits und in den Figuren 4 bis 6 andererseits eingenommenen Extrempositionen sind denkbar. Insbesondere besteht die Möglichkeit, die Saugerplattenanordnungen 8/1, 8/2, 8/3 relativ zueinander längs der X-Achse zuzustellen, ohne dass die Saugerplatten 7 der einzelnen Saugerplattenanordnungen 8/1, 8/2, 8/3 außerdem eine gegenseitige Zustellbewegung längs der Y-Achse ausführen. Auch können die Saugerplatten 7 der einzelnen Saugerplattenanordnungen 8/1, 8/2, 8/3 längs der Y-Achse relativ zueinander zugestellt werden, ohne dass außerdem die Saugerplattenanordnungen 8/1, 8/2, 8/3 längs der X-Achse eine gegenseitige Zustellbewegung ausführen müssten.

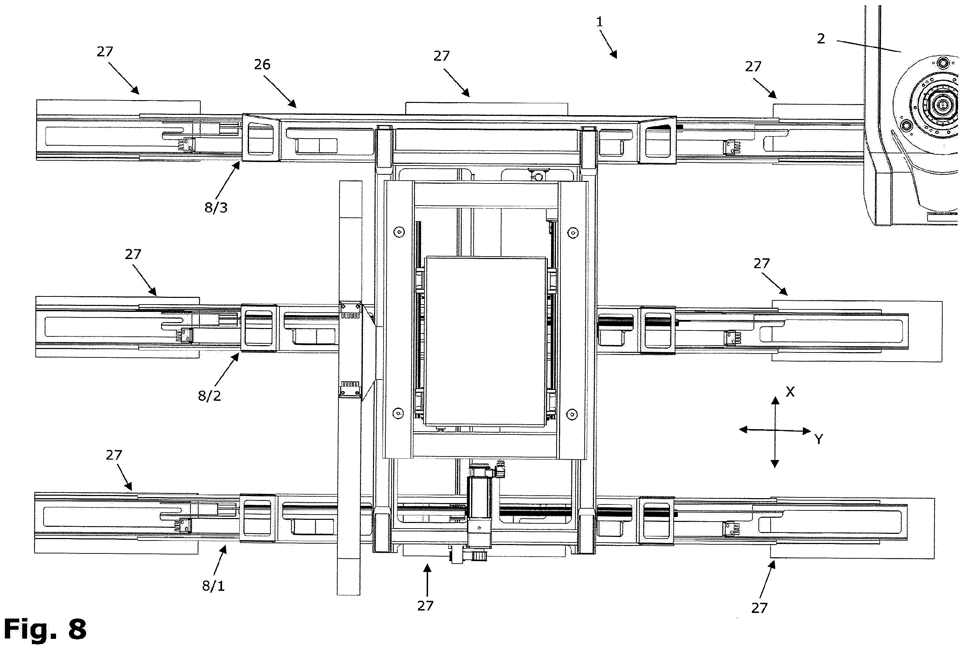

Eine in Figur 8 dargestellte Tragstruktur 26 unterscheidet sich von der Tragstruktur 6 gemäß den Figuren 1 bis 7 lediglich durch die Umrisskonturen von als Tragstruktursegmente vorgesehenen Saugerplatten 27. Abweichend von den Saugerplatten 7 gemäß den Figuren 1 bis 7 weisen die Saugerplatten 27 gemäß Figur 8 geradlinige Längs- und Querbegrenzungen ohne Vorsprünge 21 und Rücksprünge 22 auf.

## Patentansprüche

1. Vorrichtung zum Handhaben von Werkstücken an einer eine Werkstückauflageebene definierenden Werkstückauflage,
• mit einer Tragstruktur (6, 26), die sich mit ihrer Hauptebene parallel zu der Werkstückauflageebene erstreckt und die Tragstruktursegmente (7, 27) aufweist, die ihrerseits parallel zu der Hauptebene der Tragstruktur (6, 26) nebeneinander angeordnet sind und eine flächige Erstreckung der Tragstruktur (6, 26) in deren Hauptebene definieren,
• mit einer für die Tragstruktursegmente (7, 27) vorgesehenen Führungsvorrichtung (12), an welcher Tragstruktursegmente (7, 27) parallel zu der Hauptebene der Tragstruktur (6, 26) zustellbar geführt sind sowie
• mit Halteorganen (23, 24, 25), mit denen Tragstruktursegmente (7, 27) der Tragstruktur (6, 26) versehen sind und die an zu handhabenden Werkstücken zum Fixieren der Werkstücke anlegbar sind,
• wobei mit Halteorganen (23, 24, 25) versehene Tragstruktursegmente (7, 27) der Tragstruktur (6, 26) wenigstens zwei Segmentanordnungen ausbilden, die an der Führungsvorrichtung (12) unter Veränderung der flächigen Erstreckung der Tragstruktur (6, 26) längs einer ersten Achse (X-Achse), welche die Hauptebene der Tragstruktur (6, 26) aufspannt, relativ zueinander gesteuert motorisch zustellbar sind und die als Mehrsegmentanordnungen (8/1, 8/2, 8/3) mit jeweils wenigstens zwei Tragstruktursegmenten (7, 27) ausgebildet sind, die ihrerseits längs einer zweiten die Hauptebene der Tragstruktur (6, 26) aufspannenden und senkrecht zu der ersten Achse (X-Achse) der Hauptebene der Tragstruktur (6, 26) verlaufenden Achse (Y-Achse) nebeneinander angeordnet sind, und
• wobei die Tragstruktursegmente (7, 27) der Mehrsegmentanordnungen (8/1, 8/2, 8/3) unter Veränderung der flächigen Erstreckung der Tragstruktur (6, 26) längs der zweiten Achse (Y-Achse) der Hauptebene der Tragstruktur (6, 26) relativ zueinander gesteuert motorisch zustellbar sind,
**dadurch gekennzeichnet,**
• **dass** ein gemeinsamer Segment-Zustellantrieb (13, 15) mit einem gemeinsamen Antriebsmotor (13) vorgesehen ist, mittels dessen jeweils wenigstens zwei Tragstruktursegmente (7, 27) der Mehrsegmentanordnungen (8/1, 8/2, 8/3) längs der zweiten Achse (Y-Achse) der Hauptebene der Tragstruktur (6, 26) bewegbar und dadurch längs der zweiten Achse (Y-Achse) der Hauptebene der Tragstruktur (6, 26) relativ zueinander gesteuert motorisch zustellbar sind,
• **dass** der gemeinsame Segment-Zustellantrieb (13, 15) mit den längs der zweiten Achse (Y-Achse) der Hauptebene der Tragstruktur (6, 26) relativ zueinander zustellbaren Tragstruktursegmenten (7, 27) jeder der Mehrsegmentanordnungen (8/1, 8/2, 8/3) jeweils über ein Verzahnungsgetriebe (16/1, 17, 18; 16/2, 17, 18; 16/3, 17, 18) antriebsverbunden ist, welches ein mittels des gemeinsamen Antriebsmotors (13) des gemeinsamen Segment-Zustellantriebs (13, 15) angetriebenes Antriebsritzel (16/1, 16/2, 16/3) sowie über das Antriebsritzel (16/1, 16/2, 16/3) gesteuert zustellbare Zahnstangen (17, 18) aufweist, die mit den längs der zweiten Achse (Y-Achse) der Hauptebene der Tragstruktur (6, 26) relativ zueinander zustellbaren Tragstruktursegmenten (7, 27) der betreffenden Mehrsegmentanordnung (8/1, 8/2, 8/3) verbunden sind,
• **dass** der gemeinsame Segment-Zustellantrieb (13, 15) eine längs der ersten Achse (X-Achse) der Hauptebene der Tragstruktur (6, 26) verlaufende gemeinsame Antriebswelle (15) aufweist, welche mittels des gemeinsamen Antriebsmotors (13) des gemeinsamen Segment Zustellantriebs (13, 15) antreibbar ist und auf welcher Antriebsritzel (16/1, 16/2, 16/3) mehrerer Verzahnungsgetriebe (16/1, 17, 18; 16/2, 17, 18; 16/3, 17, 18) aufsitzen, wobei jedes der Antriebsritzel (16/1, 16/2, 16/3) mit einer der Mehrsegmentanordnungen (8/1, 8/2, 8/3) verbunden ist und mit Zahnstangen (17, 18) kämmt, die mit den längs der zweiten Achse (Y-Achse) der Hauptebene der Tragstruktur (6, 26) relativ zueinander zustellbaren Tragstruktursegmenten (7, 27) der betreffenden Mehrsegmentanordnung (8/1, 8/2, 8/3) verbunden und längs der zweiten Achse (Y-Achse) der Hauptebene der Tragstruktur (6, 26) relativ zueinander gesteuert motorisch zustellbar sind und
• **dass** das Antriebsritzel (16/1, 16/2, 16/3) und die Zahnstangen (17, 18) eines der Verzahnungsgetriebe (16/1, 17, 18; 16/2, 17, 18; 16/3, 17, 18) längs der ersten Achse (X-Achse) der Hauptebene der Tragstruktur (6, 26) relativ zu dem Antriebsritzel (16/1, 16/2, 16/3) und den Zahnstangen (17, 18) eines anderen der Verzahnungsgetriebe (16/1, 17, 18; 16/2, 17, 18; 16/3, 17, 18) gesteuert motorisch zustellbar sind.

2. Vorrichtung nach Anspruch 1, **dadurch gekennzeichnet, dass** die Mehrsegmentanordnungen (8/1, 8/2, 8/3) längs der ersten Achse (X-Achse) der Hauptebene der Tragstruktur (6, 26) relativ zueinander gesteuert motorisch zustellbar sind, indem die Mehrsegmentanordnungen (8/1, 8/2, 8/3) mittels eines gemeinsamen Anordnungs-Zustellantriebs längs der ersten Achse (X-Achse) der Hauptebene der Tragstruktur (6, 26) bewegbar sind.

3. Vorrichtung nach Anspruch 2, **dadurch gekennzeichnet, dass** der gemeinsame Anordnungs-Zustellantrieb über ein Verzahnungsgetriebe mit den relativ zueinander zustellbaren Mehrsegmentanordnungen (8/1, 8/2, 8/3) antriebsverbunden ist.

4. Vorrichtung nach Anspruch 3, **dadurch gekennzeichnet, dass** das Verzahnungsgetriebe ein mittels eines gemeinsamen Antriebsmotors des gemeinsamen Anordnungs-Zustellantriebs angetriebenes Antriebsritzel sowie über das Antriebsritzel gesteuert zustellbare Zahnstangen (17, 18) aufweist, die mit den relativ zueinander zustellbaren Mehrsegmentanordnungen (8/1, 8/2, 8/3) verbunden sind.

5. Vorrichtung nach einem der vorhergehenden Ansprüche, **dadurch gekennzeichnet, dass** von den längs der ersten Achse (X-Achse) der Hauptebene der Tragstruktur (6, 26) relativ zueinander gesteuert motorisch zustellbaren Mehrsegmentanordnungen (8/1, 8/2, 8/3) eine Mehrsegmentanordnung (8/1, 8/2, 8/3) bei der längs der ersten Achse (X-Achse) der Hauptebene der Tragstruktur (6, 26) ausgeführten Relativ-Zustellbewegung in der Bewegungsrichtung stationär ist.

6. Vorrichtung nach einem der vorhergehenden Ansprüche, **dadurch gekennzeichnet, dass** von den längs der zweiten Achse (Y-Achse) der Hauptebene der Tragstruktur (6, 26) relativ zueinander gesteuert motorisch zustellbaren Tragstruktursegmenten (7, 27) wenigstens einer Mehrsegmentanordnung (8/1, 8/2, 8/3) ein Tragstruktursegment (7, 27) bei der längs der zweiten Achse (Y-Achse) der Hauptebene der Tragstruktur (6, 26) ausgeführten Relativ-Zustellbewegung in der Bewegungsrichtung stationär ist.

7. Vorrichtung nach Anspruch 6, **dadurch gekennzeichnet, dass** wenigstens eine Mehrsegmentanordnung (8/1, 8/2, 8/3) eine ungerade Anzahl an Tragstruktursegmenten (7, 27) umfasst und dass als in der Bewegungsrichtung stationäres Tragstruktursegment (7, 27) das mittlere der Tragstruktursegmente (7, 27) vorgesehen ist.

8. Vorrichtung nach einem der vorhergehenden Ansprüche, **dadurch gekennzeichnet, dass** wenigstens eine Mehrsegmentanordnung (8/1, 8/2, 8/3) für die Tragstruktursegmente (7, 27) dieser Mehrsegmentanordnung (8/1, 8/2, 8/3) längs der zweiten Achse (Y-Achse) der Hauptebene der Tragstruktur (6, 26) ein Bewegungszentrum aufweist, bezüglich dessen die Tragstruktursegmente (7, 27) längs der zweiten Achse (Y-Achse) der Hauptebene der Tragstruktur (6, 26) symmetrisch angeordnet sind und dass das oder die Tragstruktursegmente (7, 27) auf der einen Seite des Bewegungszentrums und das oder die Tragstruktursegmente (7, 27) auf der anderen Seite des Bewegungszentrums miteinander synchron und dabei gegenläufig längs der zweiten Achse (Y-Achse) der Hauptebene der Tragstruktur (6, 26) relativ zueinander gesteuert motorisch zustellbar sind.

9. Vorrichtung nach Anspruch 8, **dadurch gekennzeichnet, dass** die Mehrsegmentanordnung (8/1, 8/2, 8/3) mit mittiger Anordnung des Bewegungszentrums an der Führungsvorrichtung (12) gelagert, gegebenenfalls mittels der Führungsvorrichtung (12) längs der ersten Achse (X-Achse) der Hauptebene der Tragstruktur (6, 26) zustellbar geführt ist.

10. Vorrichtung nach einem der vorhergehenden Ansprüche, **dadurch gekennzeichnet, dass** die Tragstruktursegmente (7, 27) wenigstens einer Mehrsegmentanordnung (8/1, 8/2, 8/3) längs der zweiten Achse (Y-Achse) der Hauptebene der Tragstruktur (6, 26) in einer Reihe nebeneinander angeordnet sind.

11. Vorrichtung nach Anspruch 10, **dadurch gekennzeichnet, dass** mehrere Mehrsegmentanordnungen (8/1, 8/2, 8/3) mit längs der zweiten Achse (Y-Achse) der Hauptebene der Tragstruktur (6, 26) in einer Reihe nebeneinander angeordneten Tragstruktursegmenten (7, 27) längs der ersten Achse (X-Achse) der Hauptebene der Tragstruktur (6, 26) zeilenartig aufeinander folgen, wobei die Tragstruktursegmente (7, 27) der verschiedenen Mehrsegmentanordnungen (8/1, 8/2, 8/3) längs der ersten Achse (X-Achse) der Hauptebene der Tragstruktur (6, 26) spaltenartig angeordnet sind.

12. Vorrichtung nach einem der vorhergehenden Ansprüche, **dadurch gekennzeichnet, dass** einander benachbarte Tragstruktursegmente (7, 27) in der senkrechten Projektion in die Hauptebene der Tragstruktur (6, 26) Umrisskonturen mit Vorsprüngen (21) und Rücksprüngen (22) aufweisen, wobei die Vorsprünge (21) und die Rücksprünge (22) zueinander komplementär ausgebildet sind, derart, dass die betreffenden Tragstruktursegmente (7, 27) relativ zueinander gesteuert motorisch in Positionen bewegbar sind, in welchen die einerseits vorgesehenen Vorsprünge (21) innerhalb der andererseits vorgesehenen Rücksprünge (22) angeordnet sind und derart, dass die betreffenden Tragstruktursegmente (7, 27) relativ zueinander gesteuert motorisch in Positionen bewegbar sind, in welchen die einerseits vorgesehenen Vorsprünge (21) außerhalb der andererseits vorgesehenen Rücksprünge (22) angeordnet sind.

13. Maschinelle Anordnung zum Bearbeiten, vorzugsweise zum schneidenden Bearbeiten von Werkstücken, insbesondere von Blechen, mit einer Werkstückauflage, welche eine Werkstückauflageebene definiert sowie mit einer Vorrichtung (1) zum Handhaben von Werkstücken an der Werkstückauflage, **dadurch gekennzeichnet, dass** die Vorrichtung (1) zum Handhaben von Werkstücken an der Werkstückauflage nach einem der vorhergehenden Ansprüche ausgebildet ist.

## Claims

1. Device for handling workpieces on a workpiece support defining a workpiece support plane,
• comprising a bearing structure (6, 26) which extends by the main plane thereof in parallel with the workpiece support plane and comprises bearing structure segments (7, 27) that are arranged next to one another in parallel with the main plane of the bearing structure (6, 26) and define a planar extent of the bearing structure (6, 26) in the main plane thereof,
• comprising a guide device (12) provided for the bearing structure segments (7, 27) on which bearing structure segments (7, 27) are guided so as to be positionable in parallel with the main plane of the bearing structure (6, 26), and
• comprising retaining elements (23, 24, 25) with which bearing structure segments (7, 27) of the bearing structure (6, 26) are provided and which can be placed on workpieces to be handled in order to secure said workpieces,
• bearing structure segments (7, 27) of the bearing structure (6, 26) provided with retaining elements (23, 24, 25) forming at least two segment arrangements which can be positioned relative to one another on the guide device (12) by means of a motor in a controlled manner so as to change the planar extent of the bearing structure (6, 26) along a first axis (x axis) defining the main plane of the bearing structure (6, 26) and are designed as multi-segment arrangements (8/1, 8/2, 8/3) each having at least two bearing structure segments (7, 27) arranged next to one another along a second axis (y axis) defining the main plane of the bearing structure (6, 26) and extending perpendicularly to the first axis (x axis) of the main plane of the bearing structure (6, 26), and
• the bearing structure segments (7, 27) of the multi-segment arrangements (8/1, 8/2, 8/3) being positionable relative to one another by means of a motor in a controlled manner so as to change the planar extent of the bearing structure (6, 26) along the second axis (y axis) of the main plane of the bearing structure (6, 26),
**characterised in that**
• a common segment positioning drive (13, 15) is provided having a common drive motor (13), by means of which at least two bearing structure segments (7, 27) of the multi-segment arrangements (8/1, 8/2, 8/3), in each case, can be moved along the second axis (y axis) of the main plane of the bearing structure (6, 26) and can therefore be positioned relative to one another by means of a motor in a controlled manner along the second axis (y axis) of the main plane of the bearing structure (6, 26),
• **in that** the common segment positioning drive (13, 15) is drivingly connected in each case by means of a toothed gearing (16/1, 17, 18; 16/2, 17, 18; 16/3, 17, 18) to the bearing structure segments (7, 27) of each of the multi-segment arrangements (8/1, 8/2, 8/3) that can be positioned relative to one another along the second axis (y axis) of the main plane of the bearing structure (6, 26) which toothed gearing (16/1, 17, 18; 16/2, 17, 18; 16/3, 17, 18) comprises a drive pinion (16/1, 16/2, 16/3) that is driven by means of the common drive motor (13) of the common segment positioning drive (13, 15) and toothed racks (17, 18) that can be positioned in a controlled manner by means of the drive pinion (16/1, 16/2, 16/3), which toothed racks are connected to the bearing structure segments (7, 27) of the relevant multi-segment arrangement (8/1, 8/2, 8/3) that can be positioned relative to one another along the second axis (y axis) of the main plane of the bearing structure (6, 26),
• **in that** the common segment positioning drive (13, 15) comprises a common drive shaft (15) that extends along the first axis (x axis) of the main plane of the bearing structure (6, 26) and can be driven by means of the common drive motor (13) of the common segment positioning drive (13, 15) and on which drive pinions (16/1, 16/2, 16/3) of a plurality of toothed gearings (16/1, 17, 18; 16/2, 17, 18; 16/3, 17, 18) rest, each of the drive pinions (16/1, 16/2, 16/3) being connected to one of the multi-segment arrangements (8/1, 8/2, 8/3) and meshing with toothed racks (17, 18) which are connected to the bearing structure segments (7, 27) of the relevant multi-segment arrangement (8/1, 8/2, 8/3) that can be positioned relative to one another along the second axis (y axis) of the main plane of the bearing structure (6, 26) and which can be positioned relative to one another by means of a motor in a controlled manner along the second axis (y axis) of the main plane of the bearing structure (6, 26), and
• **in that** the drive pinion (16/1, 16/2, 16/3) and the toothed racks (17, 18) of one of the toothed gearings (16/1, 17, 18; 16/2, 17, 18; 16/3, 17, 18) can be positioned relative to the drive pinion (16/1, 16/2, 16/3) and the toothed racks (17, 18) of another of the toothed gearings (16/1, 17, 18; 16/2, 17, 18; 16/3, 17, 18) by means of a motor in a controlled manner along the first axis (x axis) of the main plane of the bearing structure (6, 26).

2. Device according to claim 1, **characterised in that** the multi-segment arrangements (8/1, 8/2, 8/3) can be positioned relative to one another by means of a motor in a controlled manner along the first axis (x axis) of the main plane of the bearing structure (6, 26), by the multi-segment arrangements (8/1, 8/2, 8/3) being movable by means of a common arrangement positioning drive along the first axis (x axis) of the main plane of the bearing structure (6, 26).

3. Device according to claim 2, **characterised in that** the common arrangement positioning drive is drivingly connected to the multi-segment arrangements (8/1, 8/2, 8/3), which can be positioned relative to one another, by means of a toothed gearing.

4. Device according to claim 3, **characterised in that** the toothed gearing comprises a drive pinion that is driven by means of a common drive motor of the common arrangement positioning drive and toothed racks (17, 18) that can be positioned in a controlled manner by means of the drive pinion and are connected to the multi-segment arrangements (8/1, 8/2, 8/3) that can be positioned relative to one another.

5. Device according to any of the preceding claims, **characterised in that** one multi-segment arrangement (8/1, 8/2, 8/3) of the multi-segment arrangements (8/1, 8/2, 8/3) that can be positioned relative to one another by means of a motor in a controlled manner along the first axis (x axis) of the main plane of the bearing structure (6, 26) is stationary in the direction of movement during the relative positioning movement along the first axis (x axis) of the main plane of the bearing structure (6, 26).

6. Device according to any of the preceding claims, **characterised in that** one bearing structure segment (7, 27) of the bearing structure segments (7, 27) of at least one multi-segment arrangement (8/1, 8/2, 8/3) that can be positioned relative to one another by means of a motor in a controlled manner along the second axis (y axis) of the main plane of the bearing structure (6, 26) is stationary in the direction of movement during the relative positioning movement along the second axis (y axis) of the main plane of the bearing structure (6, 26).

7. Device according to claim 6, **characterised in that** at least one multi-segment arrangement (8/1, 8/2, 8/3) comprises an odd number of bearing structure segments (7, 27) and **in that** the middle bearing structure segment (7, 27) is provided as the bearing structure segment (7, 27) which is stationary in the direction of movement.

8. Device according to any of the preceding claims, **characterised in that** at least one multi-segment arrangement (8/1, 8/2, 8/3) has a centre of movement for the bearing structure segments (7, 27) of said multi-segment arrangement (8/1, 8/2, 8/3) along the second axis (y axis) of the main plane of the bearing structure (6, 26), around which centre of movement the bearing structure segments (7, 27) are arranged symmetrically along the second axis (y axis) of the main plane of the bearing structure (6, 26), and **in that** the bearing structure segment or segments (7, 27) on one side of the centre of movement and the bearing structure segment or segments (7, 27) on the other side of the centre of movement can be synchronously positioned relative to one another by means of a motor in a controlled manner in opposite directions of movement along the second axis (y axis) of the main plane of the bearing structure (6, 26).

9. Device according to claim 8, **characterised in that** the multi-segment arrangement (8/1, 8/2, 8/3) is mounted on the guide device (12) with a central arrangement of the centre of movement and is optionally guided by the guide device (12) so as to be positionable along the first axis (x axis) of the main plane of the bearing structure (6, 26).

10. Device according to any of the preceding claims, **characterised in that** the bearing structure segments (7, 27) of at least one multi-segment arrangement (8/1, 8/2, 8/3) are arranged in a row next to one another along the second axis (y axis) of the main plane of the bearing structure (6, 26).

11. Device according to claim 10, **characterised in that** a plurality of multi-segment arrangements (8/1, 8/2, 8/3) comprising bearing structure segments (7, 27) that are arranged in a row next to one another along the second axis (y axis) of the main plane of the bearing structure (6, 26) follow one another in rows along the first axis (x axis) of the main plane of the bearing structure (6, 26), the bearing structure segments (7, 27) of the different multi-segment arrangements (8/1, 8/2, 8/3) being arranged in columns along the first axis (x axis) of the main plane of the bearing structure (6, 26).

12. Device according to any of the preceding claims, **characterised in that** mutually adjacent bearing structure segments (7, 27) have outlines having protrusions (21) and recesses (22) in the vertical projection into the main plane of the bearing structure (6, 26), the protrusions (21) and recesses (22) being designed in a complementary manner to one another such that the relevant bearing structure segments (7, 27) can be moved relative to one another by means of a motor in a controlled manner into positions in which the protrusions (21) provided on one segment are arranged inside the recesses (22) provided on another segment and such that the relevant bearing structure segments (7, 27) can be moved relative to one another by means of a motor in a controlled manner into positions in which the protrusions (21) provided on one segment are arranged outside the recesses (22) provided on another segment.

13. Mechanical assembly for the machining, preferably for the cutting machining, of workpieces, in particular sheet metal, comprising a workpiece support which defines a workpiece support plane and comprising a device (1) for handling workpieces on the workpiece support, **characterised in that** the device (1) for handling workpieces on the workpiece support is designed according to any of the preceding claims.

## Revendications

1. Dispositif dévolu à la manipulation de pièces à usiner, sur un plateau repose-pièces définissant un plan d'appui desdites pièces à usiner, comprenant
• une structure de support (6, 26) s'étendant, par son plan principal, parallèlement audit plan d'appui desdites pièces à usiner et munie de segments (7, 27) qui, à leur tour, sont agencés en juxtaposition parallèle audit plan principal de la structure de support (6, 26) et définissent une étendue plane de ladite structure de support (6, 26) dans le plan principal de cette dernière,
• un dispositif de guidage (12) prévu pour les segments (7, 27) de la structure de support, et sur lequel lesdits segments (7, 27) de la structure de support sont guidés avec faculté de positionnement parallèlement au plan principal de ladite structure de support (6, 26), ainsi que
• des organes de retenue (23, 24, 25) dont lesdits segments (7, 27) de la structure de support (6, 26) sont pourvus, et qui peuvent être mis en applique contre des pièces à manipuler, pour fixer desdites pièces,
• sachant que des segments (7, 27) de la structure de support (6, 26), pourvus d'organes de retenue (23, 24, 25), donnent naissance à au moins deux ensembles de segments qui peuvent être positionnés les uns par rapport aux autres avec commande motorisée sur le dispositif de guidage (12), le long d'un premier axe (axe des X) sous-tendant le plan principal de la structure de support (6, 26), avec modification de l'étendue plane de ladite structure de support (6, 26), et qui sont réalisés en tant qu'ensembles (8/1, 8/2, 8/3) à segments multiples comptant, à chaque fois, au moins deux segments (7, 27) de la structure de support qui sont, à leur tour, agencés en juxtaposition le long d'un second axe (axe des Y) sous-tendant le plan principal de ladite structure de support (6, 26) et s'étendant perpendiculairement audit premier axe (axe des X) dudit plan principal de la structure de support (6, 26), et
• sachant que lesdits segments (7, 27) desdits ensembles (8/1, 8/2, 8/3) à segments multiples peuvent être positionnés les uns par rapport aux autres avec commande motorisée le long du second axe (axe des Y) du plan principal de la structure de support (6, 26), avec modification de l'étendue plane de ladite structure de support (6, 26),
**caractérisé**
• **par** la présence d'un entraînement commun (13, 15) de positionnement des segments, doté d'un moteur commun d'entraînement (13), au moyen duquel au moins deux segments (7, 27) des ensembles (8/1, 8/2, 8/3) à segments multiples peuvent être mus, à chaque fois, le long du second axe (axe des Y) du plan principal de la structure de support (6, 26) et peuvent, de la sorte, être positionnés les uns par rapport aux autres, avec commande motorisée, le long dudit second axe (axe des Y) dudit plan principal de la structure de support (6, 26) ;
• par le fait que l'entraînement commun (13, 15) de positionnement des segments est respectivement en liaison d'entraînement avec les segments (7, 27) de chacun desdits ensembles (8/1, 8/2, 8/3) à segments multiples pouvant être positinnés, les uns par rapport aux autres, le long du second axe (axe des Y) du plan principal de la structure de support (6, 26), par l'intermédiaire d'une transmission à denture (16/1, 17, 18 ; 16/2, 17, 18 ; 16/3, 17, 18) qui inclut un pignon menant (16/1, 16/2, 16/3), entraîné au moyen du moteur commun d'entraînement (13) dudit entraînement commun (13, 15) de positionnement desdits segments, ainsi que des crémaillères (17, 18) pouvant être positionnées avec commande par l'intermédiaire dudit pignon menant (16/1, 16/2, 16/3), et reliées aux segments (7, 27) de l'ensemble considéré (8/1, 8/2, 8/3) à segments multiples, qui peuvent être positonnés les uns par rapport aux autres le long dudit second axe (axe des Y) dudit plan principal de la structure de support (6, 26) ;
• par le fait que l'entraînement commun (13, 15) de positionnement des segments est muni d'un arbre menant commun (15) qui s'étend le long du premier axe (axe des X) du plan principal de la structure de support (6, 26), peut être entraîné au moyen du moteur commun d'entraînement (13) dudit entraînement commun (13, 15) de positionnement des segments, et sur lequel sont calés des pignons menants (16/1, 16/2, 16/3) de plusieurs transmissions à denture (16/1, 17, 18 ; 16/2, 17, 18 ; 16/3, 17, 18), chacun desdits pignons menants (16/1, 16/2, 16/3) étant relié à l'un des ensembles (8/1, 8/2, 8/3) à segments multiples, et engrenant dans des crémaillères (17, 18) qui sont reliées aux segments (7, 27) de l'ensemble considéré (8/1, 8/2, 8/3) à segments multiples, pouvant être positionnés les uns par rapport aux autres le long du second axe (axe des Y) du plan principal de la structure de support (6, 26), et peuvent être positonnées les unes par rapport aux autres avec commande motorisée, le long dudit second axe (axe des Y) dudit plan principal de la structure de support (6, 26) ; et
• par le fait que le pignon menant (16/1, 16/2, 16/3) et les crémaillères (17, 18) de l'une des transmissions à denture (16/1, 17, 18 ; 16/2, 17, 18 ; 16/3, 17, 18) peuvent être positionnés avec commande motorisée, le long du premier axe (axe des X) du plan principal de la structure de support (6, 26), par rapport au pignon menant (16/1, 16/2, 16/3) et aux crémaillères (17, 18) d'une autre transmission à denture (16/1, 17, 18 ; 16/2, 17, 18 ; 16/3, 17, 18).

2. Dispositif selon la revendication 1, **caractérisé par le fait que** les ensembles (8/1, 8/2, 8/3) à segments multiples peuvent être positionnés les uns par rapport aux autres avec commande motorisée, le long du premier axe (axe des X) du plan principal de la structure de support (6, 26), en ce sens que lesdits ensembles (8/1, 8/2, 8/3) à segments multiples peuvent être mus, au moyen d'un entraînement commun de positionnement desdits ensembles, le long dudit premier axe (axe des X) dudit plan principal de la structure de support (6, 26).

3. Dispositif selon la revendication 2, **caractérisé par le fait que** l'entraînement commun de positionnement des ensembles est en liaison d'entraînement, par l'intermédiaire d'une transmission à denture, avec lesdits ensembles (8/1, 8/2, 8/3) à segments multiples pouvant être positionnés les uns par rapport aux autres.

4. Dispositif selon la revendication 3, **caractérisé par le fait que** la transmission à denture inclut un pignon menant, entraîné au moyen d'un moteur commun d'entraînement de l'entraînement commun de positionnement des ensembles, ainsi que des crémaillères (17, 18) pouvant être positionnées avec commande par l'intermédiaire dudit pignon menant, et reliées aux ensembles (8/1, 8/2, 8/3) à segments multiples qui peuvent être positionnés les uns par rapport aux autres.

5. Dispositif selon l'une des revendications précédentes, **caractérisé par le fait que**, parmi les ensembles (8/1, 8/2, 8/3) à segments multiples qui peuvent être positionnés les uns par rapport aux autres avec commande motorisée, le long du premier axe (axe des X) du plan principal de la structure de support (6, 26), un ensemble (8/1, 8/2, 8/3) à segments multiples occupe une position fixe, dans la direction de mouvement, au cours du mouvement relatif de positionnement effectué le long dudit premier axe (axe des X) du plan principal de ladite structure de support (6, 26).

6. Dispositif selon l'une des revendications précédentes, **caractérisé par le fait que**, parmi les segments (7, 27) d'au moins un ensemble (8/1, 8/2, 8/3) à segments multiples qui peuvent être positionnés les uns par rapport aux autres avec commande motorisée, le long du second axe (axe des Y) du plan principal de la structure de support (6, 26), un segment (7, 27) occupe une position fixe, dans la direction de mouvement, au cours du mouvement relatif de positionnement effectué le long dudit second axe (axe des Y) dudit plan principal de la structure de support (6, 26).

7. Dispositif selon la revendication 6, **caractérisé par le fait qu'**au moins un ensemble (8/1, 8/2, 8/3) à segments multiples compte un nombre impair de segments (7, 27) de la structure de support ; et **par le fait que** le segment médian (7, 27), au sein desdits segments, est prévu en tant que segment (7, 27) fixe dans la direction de mouvement.

8. Dispositif selon l'une des revendications précédentes, **caractérisé par le fait qu'**au moins un ensemble (8/1, 8/2, 8/3) à segments multiples présente pour les segments (7, 27) de la structure de support relevant de cet ensemble (8/1, 8/2, 8/3), le long du second axe (axe des Y) du plan principal de ladite structure de support (6, 26), un centre de mouvement par rapport auquel lesdits segments (7, 27) de la structure de support sont agencés symétriquement le long dudit second axe (axe des Y) dudit plan principal de la structure de support (6, 26) ; et **par le fait que** le ou les segment(s) (7, 27) de la structure de support situé(s) sur l'un des côtés du centre de mouvement, et le ou les segment(s) (7, 27) de ladite structure de support situé(s) sur l'autre côté dudit centre de mouvement, peuvent être mutuellement positionnés avec commande motorisée, en synchronisme et dans des sens opposés, le long dudit second axe (axe des Y) du plan principal de ladite structure de support (6, 26).

9. Dispositif selon la revendication 8, **caractérisé par le fait que** l'ensemble (8/1, 8/2, 8/3) à segments multiples est monté sur le dispositif de guidage (12) avec position médiane du centre de mouvement, le cas échéant, est guidé au moyen dudit dispositif de guidage (12), avec faculté de positionnement le long du premier axe (axe des X) du plan principal de la structure de support (6, 26).

10. Dispositif selon l'une des revendications précédentes, **caractérisé par le fait que** les segments (7, 27) de la structure de support, relevant d'au moins un ensemble (8/1, 8/2, 8/3) à segments multiples, sont agencés avec juxtaposition en une rangée le long du second axe (axe des Y) du plan principal de ladite structure de support (6, 26).

11. Dispositif selon la revendication 10, **caractérisé par le fait que** plusieurs ensembles (8/1, 8/2, 8/3) à segments multiples, comportant des segments (7, 27) de la structure de support agencés avec juxtaposition en une rangée le long du second axe (axe des Y) du plan principal de ladite structure de support (6, 26), se succèdent en des lignes le long du premier axe (axe des X) dudit plan principal de la structure de support (6, 26), les segments (7, 27) des différents ensembles (8/1, 8/2, 8/3) à segments multiples étant agencés en des colonnes le long dudit premier axe (axe des X) du plan principal de ladite structure de support (6, 26).

12. Dispositif selon l'une des revendications précédentes, **caractérisé par le fait que** des segments (7, 27) de la structure de support occupant des positions voisines les unes des autres comportent, en projection verticale dans le plan de ladite structure de support (6, 26), des profilages comprenant des zones (21) en saillie et des zones (22) en retrait, lesdites zones (21) en saillie et zones (22) en retrait présentant des réalisations complémentaires, de façon telle que les segments considérés (7, 27) de ladite structure de support puissent être mus les uns par rapport aux autres, avec commande motorisée, vers des emplacements auxquels les zones (21) en saillie, prévues d'une part, se trouvent à l'intérieur des zones (22) en retrait, prévues d'autre part ; et de façon telle que lesdits segments considérés (7, 27) de ladite structure de support puissent être mus les uns par rapport aux autres, avec commande motorisée, vers des emplacements auxquels lesdites zones (21) en saillie, prévues d'une part, se trouvent à l'extérieur desdites zones (22) en retrait, prévues d'autre part.

13. Installation automatique affectée à l'usinage, de préférence à l'usinage par découpe de pièces à usiner, notamment de tôles, comprenant un plateau repose-pièces définissant un plan d'appui desdites pièces à usiner, ainsi qu'un dispositif (1) dévolu à la manipulation de pièces à usiner, sur ledit plateau repose-pièces, **caractérisée par le fait que** le dispositif (1), dévolu à la manipulation de pièces à usiner sur le plateau repose-pièces, est réalisé conformément à l'une des revendications précédentes.
